(19) Europäisches Patentamt European Patent Office Office européen des brevets

(11) **EP 2 212 733 B1**

(12) **FASCICULE DE BREVET EUROPEEN**

(45) Date de publication et mention de la délivrance du brevet:
**21.06.2017 Bulletin 2017/25**

(21) Numéro de dépôt: **08869987.1**

(22) Date de dépôt: **22.10.2008**

(51) Int Cl.:
***G02B 21/00*** *(2006.01)*

(86) Numéro de dépôt international:
**PCT/FR2008/001483**

(87) Numéro de publication internationale:
**WO 2009/087318 (16.07.2009 Gazette 2009/29)**

(54) **PROCÉDÉ ET DISPOSITIF DE RECONSTRUCTION DU VOLUME D'UN OBJET À PARTIR D'UNE SÉQUENCE D'IMAGES DE COUPES DUDIT OBJET**

VERFAHREN UND VORRICHTUNG ZUR REKONSTRUKTION DER FORM EINES OBJEKTS AUS EINER SEQUENZ VON SCHNITTBILDERN DIESES OBJEKTS

METHOD AND DEVICE FOR THE RECONSTRUCTION OF THE SHAPE OF AN OBJECT FROM A SEQUENCE OF SECTIONAL IMAGES OF SAID OBJECT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.10.2007 FR 0707480**

(43) Date de publication de la demande:
**04.08.2010 Bulletin 2010/31**

(73) Titulaires:
• **Centre National de la Recherche Scientifique**
  **75016 Paris (FR)**
• **Institut Pasteur**
  **75015 Paris (FR)**

(72) Inventeurs:
• **CHALMOND, Bernard**
  **F-78430 Louveciennes (FR)**
• **TROUVE, Alain**
  **F-75014 Paris (FR)**
• **YU, Yong**
  **F-94250 Gentilly (FR)**
• **WANG, Jiaping**
  **F-92160 Antony (FR)**
• **RENAUD, Olivier**
  **F-75017 Paris (FR)**
• **SHORTE, Spencer**
  **F-28130 Saint Piat (FR)**

(74) Mandataire: **Gevers & Orès**
  **41 avenue de Friedland**
  **75008 Paris (FR)**

(56) Documents cités:
**EP-A- 1 413 911        US-A1- 2006 285 632**
**US-A1- 2007 165 922**

• **BRANDT S S ET AL: "Motion without correspondence from tomographic projections by Bayesian inversion theory" COMPUTER VISION AND PATTERN RECOGNITION, 2004. CVPR 2004. PROCEEDINGS OF THE 2004 IEEE COMPUTER SOCIETY CONFERENCE ON WASHINGTON, DC, USA 27 JUNE - 2 JULY 2004, PISCATAWAY, NJ, USA,IEEE, vol. 1, 27 juin 2004 (2004-06-27), pages 582-587, XP010708814 ISBN: 978-0-7695-2158-9**

EP 2 212 733 B1

**Description**

L'invention porte sur un procédé de reconstruction du volume d'un objet à partir d'une séquence d'images de coupes dudit objet, le positionnement desdites coupes par rapport à l'objet étant connu de manière incertaine.

L'invention s'applique en particulier, mais de manière non limitative, à la microscopie confocale.

La reconstruction d'une image tridimensionnelle du volume d'un objet à partir d'une séquence d'images bidimensionnelles de coupes dudit objet est un puissant outil de recherche, particulièrement en biologie et en médecine.

Des nombreuses méthodes mathématiques ont été développées pour résoudre le problème de la reconstruction. Ces méthodes se basent généralement sur l'hypothèse que la position et l'orientation des plans de coupe par rapport à l'objet à reconstruire sont connues de manière précise. Or, cette hypothèse n'est pas toujours satisfaite, surtout lorsque l'objet à reconstruire présente des dimensions microscopiques.

L'article de S. Brant et M. Mevorah « Camera motion recovery without correspondence from microrotation sets in wide-field light microscopy » (Proceedings of the Statistical Methods in Multi-Image and Video Processing Workshop - ECCV 2006, Graz, Autriche, mai 2006) esquisse une technique de reconstruction prenant en compte l'instabilité des positions des plans de coupe. Conformément à cette méthode, les mouvements de rotation des plans de coupe sont estimés à partir d'une fonction d'auto-corrélation de la séquence d'images, exprimée sous la forme d'une séquence temporelle monodimensionnelle, et les mouvements de translation sont estimés par segmentation des images et recalage de leurs centres de masse. Ensuite, les estimations sont affinées par inversion bayesienne. L'efficacité de cette méthode repose sur des hypothèses qui ne sont pas toujours réalistes, en particulier lorsque les images des coupes sont obtenues par microscopie confocale à balayage ou par d'autres techniques d'imagerie par fluorescence.

La microscopie confocale à balayage est une technique de microscopie bien connue permettant d'obtenir une image d'une section d'un objet tel qu'une cellule, ladite section correspondant au plan focal de microscope. En déplaçant successivement le plan focal, on acquiert une série d'images bidimensionnelles à partir desquelles le volume de l'objet peut être reconstruit en trois dimensions.

Cette technique ne peut s'appliquer qu'à des objets qui peuvent être fixés à un substrat, tels que des cellules adhérentes. Or, des nombreuses cellules - et notamment celles du système immunitaire - ne sont pas adhérentes, et ne peuvent donc pas être reconstruites de cette manière.

Le document EP1413911 décrit un microscope équipé d'un réceptacle muni d'un ensemble d'électrodes qui permettent la manipulation d'un objet en suspension dans ledit réceptacle. En soumettant ledit objet en suspension à des mouvements de translation et/ou de rotation alors que le plan focal du microscope est maintenu fixe, il est donc possible d'acquérir une succession d'images de coupes dudit objet.

L'acquisition d'une succession de coupes obtenues par rotation est particulièrement intéressante, car elle permet de minimiser l'aberration axiale, un artefact résultant du fait que la résolution axiale d'un microscope confocale est moins bonne (d'environ un facteur deux) que sa résolution transversale.

La principale limitation de cette technique réside dans le fait que le mouvement de l'objet dans le réceptacle ne peut être contrôlé que de manière imparfaite à cause, entre autres, du mouvement brownien. Il s'ensuit que le positionnement et/ou l'orientation des coupes dans le volume dudit objet est soumis à une indétermination. On peut modéliser cette situation en considérant qu'une translation/rotation aléatoire se superpose à des translations et/ou rotations nominales de l'objet.

Dans ces conditions, les techniques de reconstruction connues de l'art antérieure ne peuvent pas s'appliquer.

Une première tentative de prendre en compte les incertitudes du mouvement est décrite dans l'article « Camera Motion Recovery Without Correspondence from Microrotation Sets in Wide-Field Light Microscopy », de S. Brandt et M. Merovah, in Proc. Statistical Methods in Multi-Image and Video Processing Workshop, ECCV, 2006. Cependant, la méthode proposée par cette publication ne fournit pas une estimation satisfaisante des translations/rotations aléatoires, et par conséquent ne permet pas une reconstruction acceptable de l'objet observé.

Un but de l'invention est de fournir des procédés permettant la reconstruction du volume d'un objet à partir d'une séquence d'images de coupes, ces procédés pouvant s'appliquer même lorsque le positionnement et/ou l'orientation des coupes dans le volume dudit objet est soumis à une indétermination.

Un objet de l'invention est donc un procédé de reconstruction du volume d'un objet à partir d'une séquence d'images de coupes dudit objet, lesdites coupes correspondant à différents positionnements et/ou orientations d'un plan d'acquisition par rapport à l'objet, lesdits positionnements et/ou orientations étant soumis à des incertitudes, le procédé étant caractérisé en ce qu'il comporte :

(a) le choix d'une base finie de fonctions, sur laquelle le volume à reconstruire peut être décomposé ;

(b) le choix d'une première fonction de quantification de l'écart entre le positionnement et/ou l'orientation réels de chaque coupe par rapport audit objet, et son positionnement et/ou orientation nominaux ;

(c) le choix d'une deuxième fonction de quantification de la cohérence spatiale du volume reconstruit;

(d) le choix d'une troisième fonction de quantification de l'écart entre les images de coupes de l'objet et les coupes correspondantes du volume reconstruit ;

(e) le choix d'une fonction de cout global, dont la valeur dépend de celle desdites première, deuxième et troisième fonctions de quantification ; et

(f) l'estimation conjointe, par minimisation de ladite fonction de cout globale, des positionnements et/ou des orientations réels des coupes, ainsi que des coefficients de décomposition de l'image de l'objet sur ladite base de fonctions.

Ledit objet est généralement tridimensionnel, mais l'invention peut également s'appliquer à la reconstruction d'un objet bidimensionnel à partir d'une succession de coupes monodimensionnelles. Le terme « volume » doit donc être interprété dans un sens large.

Selon des modes de réalisation particuliers de l'invention :

- Ladite base finie de fonctions, sur laquelle le volume à reconstruire peut être décomposé, peut être constituée de fonctions gaussiennes.
- Ladite base finie de fonctions, sur laquelle le volume à reconstruire peut être décomposé peut être une base définissant un espace d'Hilbert à noyau auto-reproduisant Dans ce cas, ladite deuxième fonction de quantification de la cohérence spatiale du volume reconstruit peut être proportionnelle à la norme dudit espace d'Hilbert à noyau auto-reproduisant.
- Ladite première fonction de quantification de l'écart entre le positionnement et/ou l'orientation réels de chaque coupe, et son positionnement et/ou orientation nominaux, peut être basée sur une norme euclidienne et/ou sur une norme géodésique.
- Ladite première fonction de quantification de l'écart entre le positionnement et/ou l'orientation réels de chaque coupe, et son positionnement et/ou orientation nominaux, peut dépendre d'au moins un paramètre de calibrage caractéristique de l'instrument utilisé pour l'acquisition des images de coupes dudit objet.
- Ladite deuxième fonction de quantification peut dépendre d'au moins un paramètre de calibrage de la cohérence spatiale et ladite troisième fonction de quantification dépend d'au moins un paramètre de calibrage d'écart, ledit procédé comportant également, préalablement à ladite étape (f), une étape (d') d'estimation conjointe, à partir de ladite séquence d'images de coupes dudit objet, d'au moins lesdits paramètres de calibrage de la cohérence spatiale et d'écart.
- L'étape (d') peut comporter l'estimation conjointe d'au moins lesdits paramètres de calibrage de la cohérence spatiale et d'écart par une méthode de maximum de vraisemblance, à partir de ladite séquence d'images de coupes dudit objet. En particulier, cette estimation par une méthode de maximum de vraisemblance peut être basée sur l'hypothèse que ladite deuxième fonction de quantification de la cohérence spatiale du volume reconstruit, ainsi que ladite troisième fonction de quantification de l'écart entre les images de coupes de l'objet et les coupes correspondantes du volume reconstruit, suivent des distributions gaussiennes.
- Ladite fonction de cout global peut être une combinaison linéaire desdites première, deuxième et troisième fonctions de quantification.
- Ladite étape (f) d'estimation conjointe des positionnements et/ou des orientations réels des coupes, ainsi que des coefficients de décomposition de l'image de l'objet sur ladite base de fonctions, peut s'effectuer par minimisation de ladite fonction de cout globale selon une méthode de descente de gradient.
- Lesdites coupes de l'objet peuvent être obtenues par des translations nominales successives, auxquelles se superposent des rotations-translations aléatoires, inconnues à priori, d'un plan d'acquisition d'image.
- En variante, lesdites coupes de l'objet peuvent être obtenues par des rotations nominales successives autour d'un même axe, auxquelles se superposent des rotations-translations aléatoires, inconnues à priori, d'un plan d'acquisition d'image. Dans ce cas, lesdites étapes (a) à (f) peuvent avantageusement être répétées pour au moins deux séquences de coupes obtenues par des rotations nominales successives d'un plan d'acquisition d'image, les axes de rotations correspondant auxdites deux séquences de coupes étant sensiblement orthogonales entre eux, et dans lequel les reconstructions du volume de l'objet obtenues à partir desdites deux séquences de coupes sont fusionnées par interpolation, par exemple par lissage spline.

Un autre objet de l'invention est un procédé de reconstruction du volume d'un objet à partir d'une pluralité de séquences d'images de coupes dudit objet, chaque séquence étant constituée de coupes obtenues par des translations nominales successives d'un plan d'acquisition, l'orientation nominale dudit plan d'acquisition étant différente pour chaque séquence et connue de manière imparfaite. Ce procédé est dénommé « protocole P.M. » (« piles multiples »), car il exploite une multiplicité de « piles » de coupes de l'objet. Non seulement les orientations réciproques des différents piles sont connues de manière imparfaite, mais à l'intérieur de chaque pile des rotations-translations aléatoires, inconnues à priori, se superposent aux translations nominales du plan d'acquisition.

Un tel procédé comporte :

(A) l'estimation des positionnements et des orientations relatifs du plan d'observation pour chacune des coupes desdites séquences par un procédé tel que décrit plus haut ;
(B) l'estimation des décalages et des différences d'orientation entre les différentes séquences et par rapport audit objet ;
(C) la compensation des décalages et différences d'orientation entre séquences d'images de coupes ; et
(D) la reconstruction dudit volume par interpolation à partir des images de coupes desdites séquences, considérées comme un seul ensemble.

Selon des modes de réalisation particuliers :

- Ladite étape (B) d'estimation des décalages et des différences d'orientation entre les différentes séquences d'images de coupes dudit objet peut être effectuée au moyen d'une analyse en composantes principales. Cette analyse en composantes principales peut, en particulier, être effectuée sur des versions binarisées desdites séquences d'images de coupes. Plus précisément, chaque séquence d'images de coupes peut être binarisée à l'aide d'un seuil de binarisation qui est estimé conjointement à un seul de binarisation d'une séquence choisie comme référence, cette estimation étant effectuée, pour chaque séquence autre que la séquence de référence, par minimisation d'une fonction d'écart entre les valeurs propres de la matrice de variance-covariance de ladite séquence et celles de la matrice de variance-covariance de ladite séquence de référence. Notamment, cette fonction d'écart peut être donnée

par : $\mathcal{E}(\tau, \tau') = \sum_k |\log \lambda_k - \log \lambda'_k|^2$ . où $\lambda_k$ et $\lambda'_k$ sont les valeurs propres des matrices de variance-covariance de la séquence binarisée considérée et de la séquence binarisée de référence, respectivement, tandis que $\tau$, $\tau'$ sont les seuils de binarisation respectifs.

Encore un autre objet de l'invention est un procédé de reconstruction du volume d'un objet, exploitant une pluralité de séquences d'images de coupes dudit objet, lesdites séquences étant de nature différente. En particulier, une première séquence peut être obtenue par des translations d'un plan d'observation par rapport audit objet (une « pile »), et au moins une deuxième séquence peut être obtenue par des rotations d'un plan d'observation par rapport audit objet. Comme dans les cas précédents, des rotations-translations aléatoires, inconnues à priori, peuvent se superposer auxdites translations ou rotations du plan d'observation associée aux différentes coupes. Un tel procédé comporte :

(i) une reconstruction préliminaire dudit volume à partir de ladite première séquence d'images par un procédé tel que décrit plus haut ;
(ii) l'estimation du positionnement et de l'orientation des coupes de ladite ou desdites deuxièmes séquences, et leur recalage spatial à partir de ces estimations ; et
(iii) la reconstruction dudit volume, par interpolation à partir de ladite ou desdites deuxièmes séquences d'images recalées de coupes.

Autrement dit, la « pile » constituée par la première séquence d'images est utilisée pour effectuer une reconstruction préliminaire, qui ne sert que pour permettre le positionnement des coupes obtenues par rotation (deuxième séquence). C'est cette deuxième séquence qui est utilisée pour la reconstruction du volume, de manière à profiter de meilleure résolution spatiale qu'elle offre en raison du phénomène d'aberration axiale mentionné plus haut.
Ce procédé est appelé « bi-protocole », car il combine deux types différents d'acquisitions.
En variante, on peut utiliser une pluralité de premières séquences d'images de coupes de l'objet, obtenues par des translations d'un plan d'observation par rapport audit objet. Dans ce cas, le procédé comporte :

(i) une reconstruction préliminaire dudit volume à partir desdites premières séquences d'images selon le protocole « P.M. » décrit plus haut ;
(ii) l'estimation du positionnement et de l'orientation des coupes de ladite ou desdites deuxièmes séquences, et leur recalage spatial à partir de ces estimations ; et
(iii) la reconstruction dudit volume par interpolation à partir de ladite ou desdites deuxièmes séquences d'images recalées de coupes.

En variante, la première séquence d'images de coupes de l'objet peut être obtenue par des rotations d'un plan d'observation par rapport audit objet, tandis que la ou les deuxièmes séquences d'images de coupes de l'objet sont obtenues par des translations dudit plan d'observation par rapport à l'objet. Autrement dit, les rôles des « piles » et de la ou des séquences obtenues par rotation sont inversés. Ce procédé comporte à son tour :

(i) une reconstruction préliminaire dudit volume à partir de ladite première séquence d'images par un procédé tel que décrit plus haut ;

(ii) l'estimation du positionnement et de l'orientation des coupes de ladite ou desdites deuxièmes séquences, et leur recalage spatial à partir de ces estimations ; et

(iii) la reconstruction dudit volume, par interpolation à partir de ladite ou desdites deuxièmes séquences d'images recalées de coupes.

Cette variante est avantageuse lorsque la résolution axiale est meilleure que la résolution transversale.

Selon des modes de réalisation particuliers d'un procédé de type « bi-protocole » :

- Ladite étape (ii) d'estimation du positionnement et de l'orientation des coupes de ladite ou desdites deuxièmes séquences, et de recalage spatial à partir de ces estimations, peut comporter la minimisation d'une fonction de quantification de l'écart entre les images de coupes de l'objet et les coupes correspondantes du volume reconstruit préliminaire.
- La minimisation d'une fonction de quantification de l'écart entre les images de coupes de l'objet et les coupes correspondantes du volume reconstruit préliminaire peut comporter : une première phase d'estimation préliminaire, basée sur l'hypothèse que toutes les coupes de ladite ou de chaque deuxième séquence sont obtenues par des déplacements et/ou des translations constants mais inconnues dudit plan d'observation ; et une deuxième phase d'affinement comportant l'estimation des rotations-translations aléatoires se superposant aux translations ou rotations supposées constantes du plan d'observation associée aux différentes coupes.
- Ladite étape (iii) de reconstruction dudit volume par interpolation à partir de ladite ou desdites deuxièmes séquences d'images recalées de coupes peut s'effectuer par lissage spline.

Il est intéressant d'observer que les procédés de type « P.M. » et « bi-protocole » peuvent également être utilisés en l'absence de translations-rotations aléatoires se superposant aux déplacements nominaux du plan d'acquisition.

Les procédés décrits ci-dessus s'appliquent en particulier au cas où lesdites séquences d'images de coupes dudit objet sont acquises par microscopie confocale. Encore plus particulièrement, ces procédés s'appliquent au cas où ledit objet est disposé dans un réceptacle d'un microscope confocal, lesdites séquences d'images de coupes dudit objet étant acquises en déplaçant ledit objet par rapport au réceptacle.

L'invention peut cependant s'appliquer aussi au cas plus conventionnel où c'est le plan focal du microscope qui se déplace, alors que i'objet reste fixe. Ce qui compte est qu'il y ait un déplacement relatif entre le plan d'acquisition et l'objet.

L'invention n'est d'ailleurs pas limitée au domaine de la microscopie.

Encore un autre objet de l'invention est un dispositif de reconstruction du volume d'un objet, comportant : un moyen d'acquisition d'une séquence d'images de coupes dudit objet, lesdites coupes correspondant à différents positionnements et/ou orientations d'un plan d'acquisition par rapport à l'objet ; et un moyen de traitement de données pour reconstruire le volume dudit objet à partir de ladite séquence d'images de coupes de ce dernier ; caractérisé en ce que les positionnements et/ou orientations du plan d'acquisition correspondant aux différentes coupes sont soumis à des incertitudes ; et en ce que le moyen de traitement de données est adapté pour mettre en oeuvre un procédé tel que décrit ci-dessous.

Ledit moyen d'acquisition d'une séquence d'images de coupes dudit objet peut être, en particulier, un microscope confocal muni d'un réceptacle pour contenir ledit objet, et de moyens pour déplacer ledit objet par rapport au réceptacle.

D'autres caractéristiques, détails et avantages de l'invention ressortiront à la lecture de la description faite en référence aux dessins annexés donnés à titre d'exemple et qui représentent, respectivement :

- Les figures 1A à 1D, un exemple simple de reconstruction d'un objet bidimensionnel à partir d'une pluralité de coupes monodimensionnelles ;
- La figure 2, un organigramme d'un procédé de reconstruction selon un premier mode de réalisation de l'invention ;
- La figure 3, un organigramme d'un procédé de reconstruction selon un deuxième mode de réalisation de l'invention (protocole « P.M. ») ;
- La figure 4, un organigramme d'un procédé de reconstruction selon un troisième mode de réalisation de l'invention (« bi-protocole ») ;
- La figure 5, une pluralité d'images de coupes acquises par rotation d'un plan d'acquisition par rapport à une cellule visualisée au moyen d'un microscope confocal ;
- Les figures 6A, 6B, 7A et 7B, des reconstructions de cette cellule à partir d'une séquence d'images de coupes obtenues respectivement par translation (6A, 7A) et par rotation (6B, 7B) d'un plan d'acquisition par rapport à ladite cellule ; et

- La figure 8, un dispositif pour la mise en oeuvre d'un procédé de reconstruction selon l'invention.

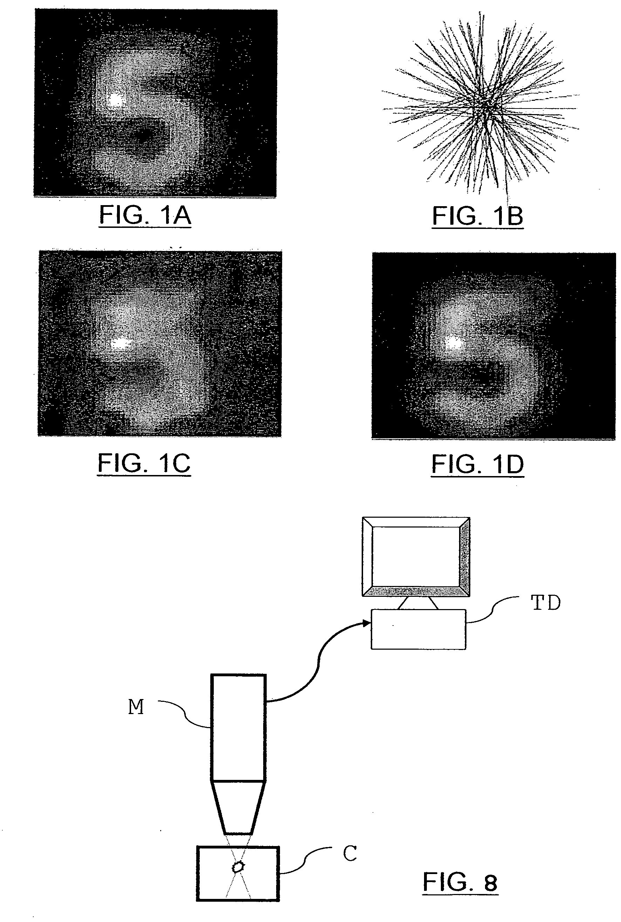

Les figures 1A à 1D permettent de comprendre de manière intuitive l'enjeu de l'invention.

La figure 1A montre un objet bidimensionnel, plus exactement une image en noir et blanc du chiffre « 5 ».

La figure 1B montre une pluralité de lignes d'acquisition qui « sondent » cet objet bidimensionnel. Nominalement, ces lignes sont obtenues par rotation d'un angle $N\varphi_0$, avec N entier, d'une ligne de base ; en réalité, on peut observer qu'une rotation-translation aléatoire se superpose à ce mouvement nominal de rotation pure.

La figure 1C montre une reconstruction de l'objet obtenue en supposant que la position et l'orientation de chaque ligne d'acquisition coïncident avec la position et l'orientation nominales. On peut voir que l'image est très dégradée en raison des rotations-translations aléatoires qui perturbent l'acquisition des images monodimensionnelles.

Enfin la figure 1 D montre une reconstruction réalisée par un procédé de l'invention. Cette reconstruction est pratiquement parfaite, malgré l'incertitude qui affecte la position et l'orientation de chaque ligne d'acquisition. Evidemment, s'agissant d'une simulation, les positions et orientations réelles des lignes d'acquisition étaient connues a priori, mais cette connaissance (qui n'est pas disponibles dans des conditions opérationnelles) n'a pas été exploitée pour obtenir l'image de la figure 1 D.

Pour décrire les procédés de l'invention de manière rigoureuse, on considère un instrument (par exemple, un microscope confocal), permettant d'acquérir une séquence de coupes $I = \{I_i, i = 1, ...n\}$ d'un objet par déplacement et/ou rotation d'un plan d'acquisition par rapport audit objet. Le mouvement peut être continu ou discret. Peu importe que ce soit le plan d'acquisition qui se déplace alors que l'objet reste fixe ou l'inverse : ce qui compte est qu'il y ait un mouvement relatif permettant au plan d'acquisition de « sonder » le volume de l'objet.

Les mouvements du plan d'acquisition engendrés par l'instrument sont plus ou moins instables. Par exemple dans le cas où l'instrument à été réglé pour un mouvement de rotation continue, la position de l'axe de rotation peut évoluer avec le temps autour de la position qui à été paramétrée lors du réglage. De plus, l'axe peut être soumis à des translations parasites. Ainsi, vis-à-vis de la séquence $I$, ce mouvement se traduit par une séquence de micromouvements $\Phi = \{\phi_i = (R_i, T_i), i = 1, ...n\}$ où $R_i$ et $T_i$ sont respectivement des micro-rotations et des micro-translations définissant la position de la coupe $I_i$. Cette séquence constitue une version dégradée ou « bruitée » du mouvement nominal de rotation

$$\Phi^0 = \{\phi_i^0 = (R, 0), \ i = 1, ...n\}$$ paramétré lors du réglage de l'instrument.

De même, dans le cas où l'instrument a été réglé pour un mouvement de translation continue, la position de l'axe de translation peut évoluer avec le temps autour de la position qui a été paramétrée lors du réglage. Vis-à-vis de la séquence $I$, ce mouvement se traduit par une séquence de micromouvements $\Phi = \{\phi_i = (R_i, T_i), i = 1, ...n\}$ où $R_i$ et $T_i$ sont respectivement des micro-rotations et des micro-translations définissant la positon de la coupe $I_i$. Cette séquence constitue une version dégradée ou « bruitée » du mouvement nominal de translation $\Phi^0 = \{\phi_i^0 = (0, T), \ i = 1, ...n\}$ paramétré lors du réglage de l'instrument.

Les procédés de l'invention permettent la reconstruction d'une image 3-D de l'objet à partir d'une séquence de coupes de cet objet. La reconstruction consiste à déterminer un volume de "densités" $f = \{f(s), \ s \in \mathbb{R}^3\}$ à partir d'une séquence de coupes $I = \{I_i(s), \ s \in \mathbb{Z}^2, \ i = 1, ..., n\}$, la position des coupes définies par $\Phi = \{\phi_i, i = 1, ...n\}$ n'étant pas connue de façon précise. On entend par « position » d'un plan d'acquisition un ensemble de paramètres définissant complètement sa situation dans l'espace, y comprise son orientation.

La fonction des « densités » $f$ peut exprimer, par exemple, les niveaux de gris d'une image monochromatique ; dans ce cas, $f$ est une fonction scalaire des coordonnées spatiales. Pour une image en couleurs (ou en fausses couleurs), $f$ sera une fonction vectorielle avec, par exemple, une composante de luminance et deux composantes de chrominance.

On suppose pour commencer que l'instrument est réglé pour un mouvement paramétré sur l'instrument par $\phi^0 = (R^0, T^0)$, avec $T^0 = 0$ dans le cas d'une rotation pure et $R^0 = Id$ dans le cas d'une translation pure. L'idée à la base de la présente invention est d'estimer simultanément les positions $\{\phi_i\}$ des coupes et la fonction $f$ des densités de l'objet. Les positions estimées le sont dans le voisinage du mouvement nominal $\phi^0$. Le volume estimé est déterminé de façon à optimiser la cohérence spatiale des densités du volume. Les deux estimations sont interdépendantes : meilleure est l'estimation des positions et meilleure est la cohérence des densités. Cette procédure s'applique à des "objets" de dimensions d (typiquement, d=2 ou 3), les coupes étant de dimension d-1. Dans la suite, on supposera toujours d=3.

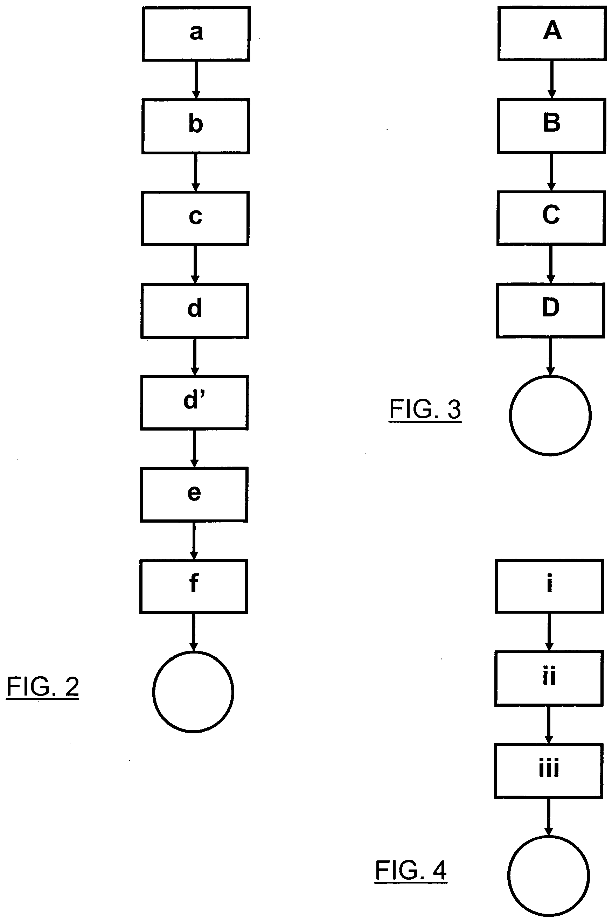

La figure 2 montre un organigramme d'un procédé de reconstruction selon un premier mode de réalisation de l'invention.

Soit $I = \{I_i, i = 1, ..., n\}$ une séquence de coupes de l'objet correspondant à un mouvement continu, soit de rotation, soit de translation, paramétré par $\phi^0$. On commence par choisir un plan de référence $H_0$ par placer toutes les images de coupe à la même place dans ce plan. Soit $f = \{f(s), \ s \in \mathbb{R}^3\}$ le volume inconnu. La position de chacune des coupes dans $f$ peut être définie en appliquant $H_0$ à une rotation affine $\phi_i = (R_i, T_i)$. On pose $\Phi = \{\phi_i, i = 1, ..., n\}$ et $\Phi^0 = \{\phi^0, i = 1, ..., n\}$. La suite de la procédure ci-présente permet d'estimer $f$ et $\Phi$.

La première étape (a) du procédé consiste à choisir une base finie de fonctions sur laquelle le volume à reconstruire (ou, plus précisément, la fonction $f$ représentative des densités dans ce volume) peut être décomposée. Cette étape permet de représenter la fonction spatiale $f$ par un nombre fini de coefficients, et de donner ainsi une dimension finie au problème d'optimisation que l'on se propose de résoudre. Cette base peut être constituée, par exemple, par une famille de gaussiennes.

Ensuite - étape (b) - on choisit une fonction de quantification $\mathcal{J}_0(\Phi)$ des écarts des mouvements « réels » du plan d'acquisition par rapport aux mouvements nominaux $\Phi^0$. Par exemple :

$$\mathcal{J}_0(\Phi) = \sum_{i=1}^{n} d^2(\phi_i, \phi_i^0) \ ,$$

où

$$d^2(\phi_i, \phi_i^0) \quad = \quad \frac{d^2(R_i, R_i^0)}{\sigma_R^2} + \frac{d^2(T_i, T_i^0)}{\sigma_T^2} \ ,$$

$$d(R, R') \quad = \quad \cos^{-1}\left( \frac{\text{trace}(R(R')^{-1}) - \mathbf{1}_{m=3}}{2} \right) \ , \quad \text{(distance géodésique)}$$

$$d^2(T, T') \quad = \quad \|T - T'\|_{\mathbb{R}^m}^2, \quad \text{(distance Euclidienne)}.$$

Les paramètres $\sigma_R$ et $\sigma_T$ règlent l'écart entre les $\phi_i$ et $\phi^0$. Ces paramètres d'incertitude sont des paramètres de calibrages caractéristiques de l'instrument et sont supposés donnés.

La troisième étape (c) consiste à choisir une fonction de quantification de la cohérence spatiale des densités de $f$. Le sens physique de cette fonction de cohérence spatiale est d'exprimer la « continuité » spatiale du volume reconstruit : en général, on ne s'attend pas à reconstruire un volume « fragmentaire », dans lequel la fonction $f$ présenterait des nombreuses discontinuités, mais plutôt un volume « continu », dans lequel les variations de $f$ seraient plus graduelles. Bien entendu, le degré de cohérence spatiale de l'objet à reconstruire n'est pas connu à priori. C'est pourquoi, avantageusement, la fonction de cohérence spatiale peut dépendre d'un ou plusieurs paramètres de calibrage qui devront à leur tour être estimés. On reviendra plus tard sur ce point.

Selon une variante de l'invention, la base finie de fonctions choisie lors de l'étape (a) peut être une base définissant un espace d'Hilbert à noyau auto-reproduisant, et ladite deuxième fonction de quantification de la cohérence spatiale du volume reconstruit peut être proportionnelle à la norme dudit espace d'Hilbert à noyau auto-reproduisant.

Par exemple, la deuxième fonction de quantification de la cohérence spatiale du volume reconstruit peut être donnée par :

$$\mathcal{J}_1(f) = \sigma_f^2 \|f\|_{\mathcal{H}}^2 \ ,$$

où $\|f\|_{\mathcal{H}}$ est une norme associé à un « noyau auto reproduisant » k:

$$f(\cdot) \quad = \quad \sum_{1 \leq i \leq N} \alpha_i k(s_i, \cdot) \ ,$$

$$\|f\|_{\mathcal{H}}^2 \quad = \quad \sum_{i,j=1}^{N} \alpha_i \alpha_j k(s_i - t_j) \ ,$$

$$k(s,t) = \rho(\|(s-t)\|/\lambda_f) \;.$$

La fonction de base, ou « fonction d'interaction spatiale » $\rho$ peut être, par exemple, une fonction Gaussienne. $N$ est le nombre de noeuds de la grille sur laquelle $f$ est calculée. Les paramètres $\{\alpha_i\}$ sont les coordonnées de $f$ sur les fonctions de base $\{k(s_i, \cdot)\}$. Les paramètres $\sigma_f$ et $\lambda_f$ constituent les paramètres de calibrage mentionnés plus haut, et qui devront être estimés.

L'étape (d) du procédé comporte le choix d'une troisième fonction de quantification de l'écart entre les images $I_i$ de coupes de l'objet et les coupes correspondantes du volume reconstruit, $f_{o\phi i}$. Par exemple :

$$\mathcal{J}_2(f,\Phi) = \sum_{i=1}^{n} \sum_{s \in H_0} |f(\varphi_i(s)) - I_i(s)|^2 / \sigma_\epsilon^2 \;.$$

où $\sigma_e$ est un autre paramètre de calibrage dépendant de l'objet, qui doit donc être estimé.

On remarquera que l'ordre des étapes (a) à (d) n'a que peu d'importance.

Les paramètre de calibrage $\sigma_f$, $\lambda_f$ et $\sigma_e$ sont estimés lors d'une étape (d'). Pour ce faire, on suppose que les écarts $(I_i(s) - f_o\phi_i(s))$ (ici $s$ appartint à $H_0$) entre la coupe acquise et sa correspondante dans l'objet, sont distribués suivant une loi gaussienne $\mathcal{N}(0, \sigma_\epsilon^2)$. On suppose aussi que $I$ est distribuée suivant la loi gaussienne $\mathcal{N}(\mu_f 1 H_0, \Gamma_\theta)$ dont la matrice de covariance $\Gamma_\theta$ est

$$\Gamma_\theta(s,t) = \sigma_f^2 \rho(\|x_s - x_t\|/\lambda_f) + \sigma_\epsilon^2 \mathbf{1}_{s=t} \;.$$

Ici, $1_{H_0}$ est un vecteur de dimension égale à celle de l'espace $H_0$ et dont les éléments sont identiquement égaux à 1, tandis que $1_{s=t}$ vaut 1 si s=t et 0 autrement.

On utilise donc le principe du Maximum de Vraisemblance pour estimer conjointement les paramétres $\theta = (\mu_f, \sigma_f^2, \lambda_f, \sigma_\epsilon^2)$ à la valeur $\hat{\theta}$ qui maximise $\sum_{i=1}^{N} \log P(I_i|\theta)$ avec

$$\log P(I_i|\theta) = -\frac{1}{2\sigma_f^2}(I_i - \mu_f \mathbf{1}_{H_0})' \Gamma_\theta^{-1} (I_i - \mu_f \mathbf{1}_{H_0}) - \frac{1}{2}\log(|\Gamma_\theta|) + \text{constante} \;.$$

L'étape successive (e) comporte le choix d'une fonction de coût globale, ou « fonction de cohérence », dépendant des trois fonctions de quantification définies lors des étapes précédentes. Par exemple, on peut choisir une combinaison linéaire :

$$\mathcal{J}(f,\Phi) = \mathcal{J}_0(\Phi) + \mathcal{J}_1(f) + \mathcal{J}_2(f,\Phi) \;.$$

Ensuite, lors de l'étape (f), on minimise cette fonction afin d'obtenir le volume reconstruit $f$ et la position des coupes $\hat{\Phi}$, par exemple en utilisant une procédure basée sur une descente de gradient qui alterne successivement la minimisation en $\Phi$ et en $f$, cette procédure étant initialisée par $\Phi^0$

Dans le cas d'une rotation, lorsque l'axe de rotation de $R^0$ n'est pas dans le plan d'acquisition, il existe une région de l'objet, de forme cylindrique ou biconique, qui n'est jamais interceptée par le plan d'acquisition et donc la reconstruction en cette région est impossible. Dans ce cas:

- on considère une seconde séquence de rotation $I'$ dont l'axe de rotation est plus ou moins orthogonal au précédent.
- On répète pour cette seconde séquence les étapes précédentes (a) à (f). On désigne par $\hat{f}'$ cette seconde reconstruction.

On obtient ainsi deux images, présentant chacune une zone où la reconstruction est impossible. Pour obtenir la reconstruction complète, on peut :

- « recaler » les volumes reconstruits l'un sur l'autre ; et

- interpoler continuellement sur $\mathbb{R}^3$ l'ensemble des données constituées par la réunion de $\hat{f}$ et $\hat{f}$, notamment par un lissage de type « spline ».

Une précision s'impose à propos des notions de « lissage » et «interpolation ». La reconstruction du volume revient à estimer un champ de densités f dans l'espace tridimensionnel. Pour les points x situés à l'emplacement des coupes, f(x) approxime la valeur de la coupe au point x : c'est ce qu'on appelle une opération de lissage. Pour les points x situés entre les coupes, f(x) crée une valeur là où il n'y en avait pas : c'est ce qu'on appelle une interpolation. En fait, les deux opérations sont étroitement liées : l'opération d'interpolation découle de l'opération de lissage qui crée une fonction régulière f(x) dans l'espace tridimensionnel. La décomposition de la fonction des densités sur une base de fonctions de dimension finie, décrite plus haut, constitue en fait une forme de lissage/interpolation.

De moins en principe, le recalage des volumes reconstruits peut être obtenu par une méthode semblable à celle qui sera décrite plus loin en référence à la figure 3 : on segmente les volumes reconstruits et on fait coïncider leurs centres de gravité et leurs axes principaux d'inertie. Cependant, il faut considérer que la présence de zones non reconstruites différentes dans les deux volumes rend ce décalage délicat.

L'algorithme de la figure 2 s'applique de manière générale à toute sorte de mouvements (nominaux) du plan d'acquisition : rotations pures d'un angle constant ou variable, translation pures d'un pas constant ou variable, combinaison de rotations et translations. Les figures 3 et 4 se rapportent à des procédés plus spécifiques exploitant des combinaisons particulières de séquences d'acquisition.

La figure 3 montre un organigramme d'un algorithme que l'on a convenu d'appeler protocole des « piles multiples », ou « P.M. ». Conformément à ce protocole, l'instrument est réglé pour effectuer une translation pure du plan d'acquisition, qui « scrute » l'objet sur toute sa longueur suivant l'orientation sélectionnée. Ensuite, cette opération est répétée pour au moins une autre orientation. Ces acquisitions en translation fournissent un ensemble de « piles » qui une fois recalées les unes par rapport aux autres permettent une estimation du volume *f*.

La difficulté est double : d'une part, chaque séquence élémentaire de translations (chaque « pile ») est affectée par des rotations-translations aléatoires du plan d'acquisition ; d'autre part, le positionnement et l'orientation relatifs des différentes piles ne sont connus que de manière imparfaite.

Soit $\vec{I} = \{\vec{I}_i, i = 1, ..., n\}$ la première séquence de coupes de l'objet correspondant à un mouvement de translation paramétré sur l'appareil par $\phi^0 = (Id, T^0)$. Soient $\vec{I}'$, $\vec{I}''$, etc. les autres séquences de translation correspondant respectivement aux paramètres de l'instrument $\phi'^0$, $\phi''^0$, etc.

La première étape (A) du procédé consiste à appliquer le procédé de la figure 2 pour « positionner » dans la pile correspondante chacune des images de coupes d'une séquence. Cette étape permet de déterminer la position et l'orientation relatives des coupes d'une même pile, mais pas l'orientation relative des différentes piles entre elles.

Cette étape peut être omise si l'on considère que les séquences ne sont pas affectées de manière sensible par les rotations-translations aléatoires qui se superposent aux mouvements nominaux.

Ensuite, une pile $\vec{I}$ est choisie en tant que « pile de référence » ; les décalages et différences d'orientation des autres piles $\vec{I}'$, $\vec{I}''$, etc. par rapport à ladite pile de référence sont estimées - étape (B) - et compensées - étape (C) - afin de permettre la reconstruction du volume - étape (D).

Pour « recaler » une pile générique $\vec{I}'$ sur la pile de référence $\vec{I}$ on procède comme suit.

- On choisit une fonction de binarisation des coupes, paramétrée le paramètre de seuil $\tau$, qui transforme $\vec{I}$ en une coupe $\vec{I}$ binarisée telle que $\underline{\vec{I}}_i = 1$ ou 0. Dans le cas d'un objet clair sur un fond sombre, une telle fonction peut être, par exemple, $\underline{\vec{I}}_i = 1$ si $I_i > \tau$ si $I_i$ $\tau$ et 0 sinon. Soi $\tau'$ le paramètre de binarisation de $\vec{I}'$, définie de la même manière. Les paramètres de seuil $\tau$ et $\tau'$ sont à déterminer.

- Pour chaque couple $(\tau, \tau')$, on réalise une Analyse en Composantes Principales de $\vec{I}$ (resp. $\underline{\vec{I}'}$) sur le nuage des points de $\mathbb{R}^3$ composé des coordonnés des pixels i tels que $\underline{\vec{I}}_i = 1$. On désigne par $\{\lambda_k, k = 1, 2, 3\}$ les valeurs propres de la matrice de variance-covariance du nuage (resp. $\{\lambda'_k, k = 1, 2, 3\}$ celles associées au nuage de $\underline{\vec{I}'}$).

- Ensuite, on estime $(\tau, \tau')$ en minimisant la fonction

$$\mathcal{E}(\tau, \tau') = \sum_{k} |\log \lambda_k - \log \lambda'_k|^2 \, .$$

- En utilisant le couple précédemment obtenu, on peut recaler les deux nuages correspondants en faisant correspondre leurs centres de gravités ainsi que les vecteurs propres de leur matrice de variance-covariance. On désigne par $\phi'$ = $(R', T')$ l'application affine de ce recalage et par $\vec{I}'_{\phi(i)}$, $\vec{I}''_{\phi''(i)}$, etc. les piles recalées sur $\vec{I}$

Ces différentes opérations sont répétées pour toutes les piles autres que la pile de référence. On remarque que le paramètre de seuil r est estimé à chaque fois, et que sa valeur n'est pas la même à chaque itération de la procédure.

Enfin - étape (D) - on Interpole ces piles recalés, considérées comme un seul ensemble, par un lissage « spline » en trois dimensions.

Le procédé de la figure 4, que l'on a convenu d'appeler « bi-protocole », s'applique lorsqu'on dispose au moins d'une séquence $\breve{I}$ obtenue par rotation et au moins d'une séquence $\vec{I}$ obtenue par translation. Dans un premier temps, la ou les séquences de translation sont utilisées pour obtenir une reconstruction préliminaire $\vec{f}$. Dans un second temps, les positions des coupes $\breve{I}_{1i}$ sont obtenues par positionnement dans $\vec{f}$, la reconstruction finale étant basée sur $\breve{I}$. Ce protocole convient particulièrement lorsque l'information apportée par $\vec{I}$ est moindre que celle apportée par $\breve{I}$. Par exemple, quand la résolution est plus grande latéralement (c'est-à-dire dans le plan d'acquisition) qu'axialement (perpendiculairement à ce plan) on préfère utiliser pour la reconstruction finale les séquences de coupes en rotation et on exploite les séquences en translation uniquement pour la reconstruction préliminaire.

Soit $\breve{I} = \{\breve{I}_{1i}, i = 1, ..., n\}$ une séquence de coupes de l'objet correspondant à des rotations d'un angle constant $\phi^0$ du plan d'acquisition. Soit $\breve{I}' = \{\breve{I}'_{i}, i = 1, ..., n\}$ une seconde séquence correspondant à un mouvement de rotation continue dont l'axe de rotation est plus moins orthogonale au précédent. On choisit un plan de référence $H_0$ et on place toutes les coupes de rotation à la même place dans ce plan.

Soit $\vec{I} = \{\vec{I}_i, i = 1, ..., m\}$ une séquence ou « pile » de coupes de l'objet correspondant à un mouvement de translation. Eventuellement, on peut prendre une seconde séquence de coupes en translation $\vec{I}'$, et même plusieurs $(\vec{I}''$, $\vec{I}'''$, ...). En cas d'instabilité du mouvement de translation, on positionne chacune des coupes dans la pile correspondante en appliquant l'algorithme de la figure 2. Ce positionnement fournit autant de piles que de séquences.

Soit $f = \{f(s), \, s \in \mathbb{R}^3\}$ le volume inconnu à reconstruire. La position de chacune des coupes de rotation $\breve{I}_{1i}$ dans f est définie en appliquant à $H_0$ une rotation affine $\phi_i = (T_i, T_i)$ qu'il s'agit d'estimer comme suit.

Etape (A) : Reconstruction préliminaire. Dans le cas d'une seule pile $\vec{I}$, il suffit d'interpoler cette pile continuellement sur $\mathbb{R}^3$, par exemple en utilisant un lissage spline en trois dimensions, le résultat constituant une reconstruction initiale notée $\vec{f}$.

Si on dispose d'une pluralité de piles, on procède selon l'algorithme de la figure 3. Du fait des incertitudes de positionnement des piles, cette procédure calcule pour chacune des piles $\vec{I}'$, $\vec{I}''$, etc. sa position relative vis-à-vis de la pile de référence $\vec{I}$., puis utilise ces positions pour recaler ces piles sur ladite pile de référence. L'ensemble de ces piles recalées sont interpolées par un lissage spline en trois dimensions, le résultat constituant une reconstruction initiale notée $\vec{f}$.

Etape (B) : Estimation du positionnement et de l'estimation des coupes de la (ou des) deuxième(s) séquence(s), et leur recalage spatial.

Cette étape s'effectue en deux phases : une estimation préliminaire, dans laquelle on suppose que le mouvement de rotation du plan d'acquisition est exactement $\phi^0 = (R^0, 0)$, c'est-à-dire que l'on néglige momentanément les incertitudes ; et une deuxième phase d'affinement, dans laquelle on prend en compte les incertitudes négligées en précédence.

Lors de la première phase, la définition de la position des coupes a lieu en deux temps. D'abord, on déploie les coupes stockées dans le plan $H_0$ pour les amener en position de rotation dans l'espace : la position de rotation du premier plan de coupe $P_1$ est alors le résultat d'une rotation affine $\psi_1 = (R_1, T_1)$ appliquée à $H_0$ : $P_1 = R_1 H_0 + T_1$, tandis que les plans de coupe suivants $P_i$ sont obtenus par application successive de $R^0$ à ce premier plan de coupe : $P_i = (R^0)^{i-1} P_1$. Ensuite on positionne dans $\vec{f}$ cet ensemble de coupes en rotation. Le mouvement de rotation étant supposé stable, la position des $\breve{I}_{1i}$ dans $\vec{f}$ est donnée par une unique rotation affine $\psi = (R, T)$ appliquée aux $P_i$. Finalement, la

position des coupes est définie par les paramètres $\phi^1 = (\psi_1, \psi)$ qui sont estimés en minimisant

$$\sum_i \| \breve{I}_i - \vec{f}(\psi \circ P_i) \|^2$$

expression dans laquelle $P_i$ dépend de $\psi_1$.

Lors de la deuxième phase de l'étape (B), les estimations sont affinées afin de tenir compte des instabilités. On note $P_i^1$ les positions issues de l'estimation précédente. La position finale est à proximité de $P_i^1$ et est définie par une rotation affine $\phi_i = (R_i, T_i)$ appliquée à $P_i^1$. On estime $\Phi = \{\phi_i, i = 1, ..., n\}$ en minimisant

$$\sum_i \| \breve{I}_i - \vec{f}(\phi_i \circ P_i^1) \|^2 \ .$$

L'étape (C) de reconstruction s'effectue en interpolant continuellement sur $\mathbb{R}^3$ les coupes $\breve{I}_i$ positionnées, par exemple en utilisant un lissage spline en trois dimensions, le résultat constituant une reconstruction du volume $f$, notée $\breve{f}$.

Quand l'axe de rotation de $R^0$ n'est pas dans le plan d'acquisition, il existe une région de l'objet qui n'est jamais interceptée par le plan d'acquisition et donc la reconstruction en cette région est impossible. Dans ce cas, les étapes (A) et (B) sont répétée pour la séquence $\breve{I}'$, puis on interpole continuellement sur $\mathbb{R}^3$ l'ensemble des coupes $\breve{I}_i$ et $\breve{I}'_i$ en utilisant un lissage spline en trois dimensions, le résultat constituant une reconstruction du volume $f$, notée encore $\breve{f}$.

Plus généralement, on peut utiliser une pluralité de « deuxièmes séquences » en rotation.

Jusqu'ici on a considéré le cas où la reconstruction préliminaire est obtenue à partir d'une ou plusieurs séquences de coupes en translation et la reconstruction finale à partir d'une ou plusieurs séquences de coupes en rotation. L'inverse est également possible ; seulement, comme cela a été discuté plus haut, la fusion des images de deux séquences de coupes en rotation autour d'axes différents peut s'avérer délicate.

L'invention peut s'appliquer en particulier, mais pas exclusivement, à la microscopie confocale. Dans ce domaine, elle permet, par exemple :

- la reconstruction virtuelle en trois dimensions de cellules individuelles vivantes et non-adhérentes à partir d'une séquence d'images bidimensionnelles de microscopie confocale de fluorescence ; et
- la suppression de l'aberration axiale inhérente à la microscopie et l'amélioration de la résolution spatiale.

Les techniques conventionnelles de reconstruction en trois dimension d'une cellule nécessitent de fixer cette dernière sur une surface transparente. La cellule y est manuellement positionnée suivant quelques orientations. Pour chaque orientation, une séquence de coupes en translation verticale est acquise, c'est le protocole connu sous l'appellation anglo-saxonne « z-stack ». La fusion de ces piles donne alors une représentation tridimensionnelle de la cellule qui ne peut cependant s'affranchir pleinement de l'aberration axiale et du manque de résolution. En outre, ce procédé ne peut pas être appliqué, ou difficilement, aux cellules non-adhérentes.

Dans la base ATCC (American Type Cell Culture Collection) qui met à la disposition des chercheurs 4000 types de cellules, de l'ordre de 1500 sont non-adhérentes. Parmi elles, 280 sont des cellules humaines qui sont sous-exploitées par manque d'analyse tridimensionnelle.

Le document EP1413911 précité décrit un microscope équipé d'un instrument (« manipulateur de cellules ») qui permet de capturer une cellule en suspension dans une solution aqueuse puis de la faire se mouvoir en rotation ou en translation sous l'objectif du microscope. Ce mouvement permet ainsi d'examiner la cellule sous différentes orientations. La partie centrale de cet instrument est une "cage" de capture placée sous l'objectif. C'est un champ diélectrique généré dans la cage qui permet la capture et le mouvement de la cellule, et ceci en accord avec le paramétrage du champ qui est réglable au niveau de la cage. Le premier avantage expérimental de cet instrument est de permettre l'analyse d'objets en suspension ce qui est particulièrement intéressant pour les cellules non-adhérentes (comme celles du système immunitaire).

Malheureusement, la reconstruction nécessite une connaissance relativement précise des orientations de la cellule. Or, le « manipulateur » du document EP1413911 ne permet de régler que grossièrement l'orientation de la cellule, empêchant par là d'utiliser en routine cette nouvelle technique.

Le « manipulateur de cellules » présente en outre l'avantage de rendre possibles des acquisitions « en rotation », ce qui permet de s'affranchir de l' « aberration axiale », inhérente aux microscopes optiques et liée au fait que la résolution perpendiculaire au plan focal (axe z) est deux fois moindre que la résolution à l'intérieur du plan focal (*xy*). A cause de cet effet, un objet sphérique apparaît de forme elliptique, son grand axe étant orienté suivant 0z. Ce problème a été jusqu'à présent un obstacle majeur pour l'imagerie microscopique tridimensionnelle puisqu'elle est essentiellement basée sur des acquisitions de type « z-stacks ». Mais les avantages apportés par le dispositif du document EP1413911 sont restés jusque là « virtuels » en l'absence d'un procédé de reconstruction permettant de s'affranchir des incertitudes dans le déplacement de la cellule.

C'est à ce niveau que se situe l'un des apports principaux de l'invention.

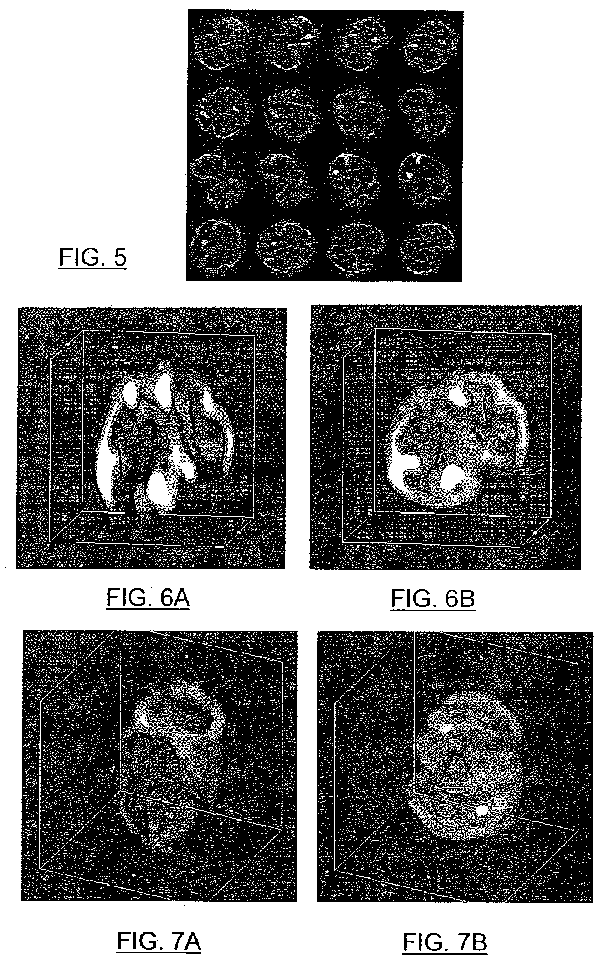

La figure 5 montre une pluralité d'images de coupes acquises par rotation d'un plan d'acquision par rapport à une cellule visualisée au moyen du microscope confocal du document EP1413911.

Les figures 6A et 7A montrent deux vues d'une reconstruction de cette même cellule, réalisée conformément au procédé de l'invention par application d'un protocole « z-stack » (séquence d'acquisition d'images de coupes par translation de la cellule par rapport au plan focal).

Les figures 6B et 7B montrent les deux vues correspondantes d'une reconstruction de cette même cellule, réalisée conformément au procédé de l'invention, mais par application d'un « bi-protocole » (voir figure 4), dans lequel la reconstruction finale a été effectuée sur la base d'une séquence d'images de coupes acquises par rotation de la cellule par rapport au plan focal. La comparaison des figures 6A/6B et 7A/7B met en évidence la suppression du phénomène d'aberration axiale qui peut être obtenue en exploitant des séquences d'acquisition « en rotation ».

La figure 8 représente de manière très schématique un microscope confocal M équipé d'un « manipulateur de cellules » C et d'un dispositif de traitement de données TD pour la mise en oeuvre d'un procédé de reconstruction selon l'invention.

## Revendications

1. Procédé de reconstruction du volume d'un objet à partir d'une séquence d'images de coupes dudit objet, lesdites coupes correspondant à différents positionnements et/ou orientations d'un plan d'acquisition par rapport à l'objet, lesdits positionnements et/ou orientations étant soumis à des incertitudes, le procédé étant tel qu'il comporte :

   (a) le choix d'une base finie de fonctions, sur laquelle le volume à reconstruire peut être décomposé ;
   (b) le choix d'une première fonction de quantification de l'écart entre le positionnement et/ou l'orientation réels de chaque coupe par rapport audit objet, et son positionnement et/ou orientation nominaux ;
   (c) le choix d'une deuxième fonction de quantification de la cohérence spatiale du volume reconstruit;
   (d) le choix d'une troisième fonction de quantification de l'écart entre les images de coupes de l'objet et les coupes correspondantes du volume reconstruit ;
   (e) le choix d'une fonction de cout global, dont la valeur dépend de celle desdites première, deuxième et troisième fonctions de quantification ; et
   (f) l'estimation conjointe, par minimisation de ladite fonction de cout globale, des positionnements et/ou des orientations réels des coupes, ainsi que des coefficients de décomposition de l'image de l'objet sur ladite base de fonctions.

2. Procédé selon la revendication 1, dans lequel ladite base finie de fonctions, sur laquelle le volume à reconstruire peut être décomposé est une base définissant un espace d'Hilbert à noyau auto-reproduisant, et dans lequel ladite deuxième fonction de quantification de la cohérence spatiale du volume reconstruit est proportionnelle à la norme dudit espace d'Hilbert à noyau auto-reproduisant.

3. Procédé selon l'une des revendications précédentes, dans lequel ladite première fonction de quantification de l'écart entre le positionnement et/ou l'orientation réels de chaque coupe, et son positionnement et/ou orientation nominaux, est basée sur une norme euclidienne et/ou sur une norme géodésique.

4. Procédé selon l'une des revendications précédentes, dans lequel ladite première fonction de quantification de l'écart entre le positionnement et/ou l'orientation réels de chaque coupe, et son positionnement et/ou orientation nominaux, dépend d'au moins un paramètre de calibrage caractéristique de l'instrument utilisé pour l'acquisition des images de coupes dudit objet.

5. Procédé selon l'une des revendications précédentes, dans lequel ladite deuxième fonction de quantification dépend d'au moins un paramètre de calibrage de la cohérence spatiale et ladite troisième fonction de quantification dépend d'au moins un paramètre de calibrage d'écart, ledit procédé comportant également, préalablement à ladite étape (f), une étape (d') d' estimation conjointe, à partir de ladite séquence d'images de coupes dudit objet, d'au moins lesdits paramètres de calibrage de la cohérence spatiale et d'écart.

6. Procédé selon la revendication 5, dans lequel l'étape (d') comporte l'estimation conjointe d'au moins lesdits paramètres de calibrage de la cohérence spatiale et d'écart par une méthode de maximum de vraisemblance, à partir de ladite séquence d'images de coupes dudit objet.

7. Procédé selon la revendication 6, dans lequel ladite estimation par une méthode de maximum de vraisemblance est basée sur l'hypothèse que ladite deuxième fonction de quantification de la cohérence spatiale du volume reconstruit, ainsi que ladite troisième fonction de quantification de l'écart entre les images de coupes de l'objet et les coupes correspondantes du volume reconstruit, suivent des distributions gaussiennes.

8. Procédé selon l'une des revendications précédentes, dans lequel lesdites coupes de l'objet sont obtenues par des translations nominales successives, auxquelles se superposent des rotations-translations aléatoires, inconnues à priori, d'un plan d'acquisition d'image.

9. Procédé selon l'une des revendications 1 à 7, dans lequel lesdites coupes de l'objet sont obtenues par des rotations nominales successives autour d'un même axe, auxquelles se superposent des rotations-translations aléatoires, inconnues à priori, d'un plan d'acquisition d'image.

10. Procédé selon la revendication 9, dans lequel lesdites étapes (a) à (f) sont répétées pour au moins deux séquences de coupes obtenues par des rotations nominales successives d'un plan d'acquisition d'image, les axes de rotations correspondant auxdites deux séquences de coupes étant sensiblement orthogonales entre eux, et dans lequel les reconstructions du volume de l'objet obtenues à partir desdites deux séquences de coupes sont fusionnées par interpolation.

11. Procédé de reconstruction du volume d'un objet à partir d'une pluralité de séquences d'images de coupes dudit objet, chaque séquence étant constituée de coupes obtenues par des translations nominales successives, auxquelles se superposent des rotations-translations aléatoires, inconnues à priori, d'un plan d'acquisition, l'orientation nominale dudit plan d'acquisition étant différente pour chaque séquence et connue de manière imparfaite, ledit procédé comportant :

   (A) l'estimation des positionnements et des orientations relatifs du plan d'observation pour chacune des coupes desdites séquences par un procédé selon l'une des revendications 1 à 8;
   (B) l'estimation des décalages et des différences d'orientation entre les différentes séquences et par rapport audit objet ;
   (C) la compensation des décalages et différences d'orientation entre séquences d'images de coupes ; et
   (D) la reconstruction dudit volume par interpolation à partir des images de coupes desdites séquences, considérées comme un seul ensemble.

12. Procédé selon la revendication 11, dans lequel ladite étape (B) d'estimation des décalages et des différences d'orientation entre les différentes séquences d'images de coupes dudit objet est effectuée au moyen d'une analyse en composantes principales.

13. Procédé selon la revendication 12, dans lequel ladite analyse en composantes principales est effectuée sur des versions binarisées desdites séquences d'images de coupes, chaque séquence d'images de coupes étant binarisée à l'aide d'un seuil de binarisation qui est estimé conjointement à un seuil de binarisation d'une séquence choisie comme référence, cette estimation étant effectuée, pour chaque séquence autre que la séquence de référence, par minimisation d'une fonction d'écart entre les valeurs propres de la matrice de variance-covariance de ladite séquence et celles de la matrice de variance-covariance de ladite séquence de référence.

14. Procédé de reconstruction du volume d'un objet à partir d'une pluralité de séquences d'images de coupes dudit objet, dans lequel ladite pluralité de séquences comprend :

   - une première séquence d'images de coupes de l'objet, obtenue par des translations d'un plan d'observation par rapport audit objet ; et

- au moins une deuxième séquence d'images de coupes de l'objet, obtenues par des rotations d'un plan d'observation par rapport audit objet ;

où des rotations-translations aléatoires, inconnues à priori, se superposent auxdites translations ou rotations du plan d'observation associée aux différentes coupes ;
ledit procédé comportant :

(i) une reconstruction préliminaire dudit volume à partir de ladite première séquence d'images par un procédé selon l'une des revendications 1 à 8;
(ii) l'estimation du positionnement et de l'orientation des coupes de ladite ou desdites deuxièmes séquences, et leur recalage spatial à partir de ces estimations ; et
(iii) la reconstruction dudit volume par interpolation à partir de ladite ou desdites deuxièmes séquences d'images recalées de coupes.

15. Procédé de reconstruction du volume d'un objet à partir d'une pluralité de séquences d'images de coupes dudit objet, dans lequel ladite pluralité de séquence comprend :

- une pluralité de premières séquences d'images de coupes de l'objet, obtenue par des translations d'un plan d'observation par rapport audit objet ; et
- au moins une deuxième séquence d'images de coupes de l'objet, obtenues par des rotations d'un plan d'observation par rapport audit objet ;

où des rotations-translations aléatoires, inconnues à priori, se superposent auxdites translations ou rotations du plan d'observation associée aux différentes coupes ;
ledit procédé comportant :

i) une reconstruction préliminaire dudit volume séquences à partir desdites premières séquences d'images par un procédé selon l'une des revendications 11 à 13;
ii) l'estimation du positionnement et de l'orientation des coupes de ladite ou desdites deuxièmes séquences, et leur recalage spatial à partir de ces estimations ; et
iii) la reconstruction dudit volume par interpolation à partir de ladite ou desdites deuxièmes séquences d'images recalées de coupes.

16. Procédé de reconstruction du volume d'un objet à partir d'une pluralité de séquences d'images de coupes dudit objet, dans lequel ladite pluralité de séquence comprend :

- une première séquence d'images de coupes de l'objet, obtenue par des rotations d'un plan d'observation par rapport audit objet ; et
- au moins une deuxième séquence d'images de coupes de l'objet, obtenues par des translations d'un plan d'observation par rapport audit objet ;

où des rotations-translations aléatoires, inconnues à priori, se superposent auxdites translations ou rotations du plan d'observation associée aux différentes coupes ;
ledit procédé comportant :

(i) une reconstruction préliminaire dudit volume à partir de ladite première séquence d'images par un procédé selon l'une des revendications 1 à 7 ou 9 ou 10;
(ii) l'estimation du positionnement et de l'orientation des coupes de ladite ou desdites deuxièmes séquences, et leur recalage spatial à partir de ces estimations ; et
(iii) la reconstruction dudit volume par interpolation à partir de ladite ou desdites deuxièmes séquences d'images recalées de coupes.

17. Procédé selon l'une des revendications 14 à 16, dans lequel ladite étape (ii) d'estimation du positionnement et de l'orientation des coupes de ladite ou desdites deuxièmes séquences, et de recalage spatial à partir de ces estimations, comporte la minimisation d'une fonction de quantification de l'écart entre les images de coupes de l'objet et les coupes correspondantes du volume reconstruit préliminaire.

18. Procédé selon la revendication 17, dans lequel la minimisation d'une fonction de quantification de l'écart entre les images de coupes de l'objet et les coupes correspondantes du volume reconstruit préliminaire comporte :

- une première phase d'estimation préliminaire, basée sur l'hypothèse que toutes les coupes de ladite ou de chaque deuxième séquence sont obtenues par des déplacements et/ou des translations constants mais inconnues dudit plan d'observation ; et
- une deuxième phase d'affinement comportant l'estimation des rotations-translations aléatoires se superposant aux translations ou rotations supposées constantes du plan d'observation associée aux différentes coupes.

19. Procédé selon l'une des revendications précédentes, dans lequel lesdites séquences d'images de coupes dudit objet sont acquises par microscopie confocale.

20. Dispositif de reconstruction du volume d'un objet, comportant :

- un moyen d'acquisition d'une séquence d'images de coupes dudit objet, lesdites coupes correspondant à différents positionnements et/ou orientations d'un plan d'acquisition par rapport à l'objet ; et
- un moyen de traitement de données pour reconstruire le volume dudit objet à partir de ladite séquence d'images de coupes de ce dernier ;

**caractérisé en ce que**

- les positionnements et/ou orientations du plan d'acquisition correspondant aux différentes coupes sont soumis à des incertitudes ; et **en ce que**
- le moyen de traitement de données est adapté pour mettre en oeuvre un procédé selon l'une des revendications 1 à 19.

21. Dispositif selon la revendication 20, dans lequel ledit moyen d'acquisition d'une séquence d'images de coupes dudit objet est un microscope confocal muni d'un réceptacle pour contenir ledit objet, et de moyens pour déplacer ledit objet par rapport au réceptacle.

**Patentansprüche**

1. Verfahren zur Rekonstruktion der Form eines Objekts aus einer Sequenz von Schnittbildern des Objekts, wobei die Schnitte unterschiedlichen Positionierungen und/oder Ausrichtungen einer Erfassungsebene in Bezug auf das Objekt entsprechen, wobei die Positionierungen und/oder Ausrichtungen Unsicherheiten unterliegen, wobei das Verfahren derart ist, dass es Folgendes umfasst:

(a) die Auswahl einer endlichen Basis von Funktionen, auf der die zu rekonstruierende Form zerlegt werden kann;
(b) die Auswahl einer ersten Funktion zur Quantifizierung der Abweichung zwischen der tatsächlichen Positionierung und/oder Ausrichtung von jedem Schnitt in Bezug auf das Objekt und seiner Nennpositionierung und/oder -ausrichtung;
(c) die Auswahl einer zweiten Funktion zur Quantifizierung der räumlichen Kohärenz der rekonstruierten Form;
(d) die Auswahl einer dritten Funktion zur Quantifizierung der Abweichung zwischen den Schnittbildern des Objekts und den entsprechenden Schnitten der rekonstruierten Form;
(e) die Auswahl einer Gesamtkostenfunktion, deren Wert von der ersten, zweiten und dritten Quantifizierungsfunktion abhängig ist; und
(f) die gemeinsame Schätzung der tatsächlichen Positionierungen und/oder Ausrichtungen der Schnitte sowie der Zerlegungskoeffizienten des Bildes des Objekts auf der Basis von Funktionen durch Minimierung der Gesamtkostenfunktion.

2. Verfahren nach Anspruch 1, wobei die endliche Basis von Funktionen, auf der die zu rekonstruierende Form zerlegt werden kann, eine Basis ist, die einen Hilbertraum mit selbstreproduzierendem Kern definiert, und wobei die zweite Funktion zur Quantifizierung der räumlichen Kohärenz der rekonstruierten Form proportional zur Norm des Hilbertraums mit selbstreproduzierendem Kern ist.

3. Verfahren nach einem der vorhergehenden Ansprüche, wobei die erste Funktion zur Quantifizierung der Abweichung zwischen der tatsächlichen Positionierung und/oder Ausrichtung von jedem Schnitt und seiner Nennpositionierung und/oder - ausrichtung auf einer euklidischen Norm und/oder einer geodätischen Norm basiert.

**4.** Verfahren nach einem der vorhergehenden Ansprüche, wobei die erste Funktion zur Quantifizierung der Abweichung zwischen der tatsächlichen Positionierung und/oder Ausrichtung von jedem Schnitt und seiner Nennpositionierung und/oder - ausrichtung von mindestens einem Kalibrierungsparameter abhängig ist, der für das zur Erfassung der Schnittbilder des Objekts verwendete Instrument charakteristisch ist.

**5.** Verfahren nach einem der vorhergehenden Ansprüche, wobei die zweite Quantifizierungsfunktion von mindestens einem Parameter zur Kalibrierung der räumlichen Kohärenz abhängig ist und die dritte Quantifizierungsfunktion von mindestens einem Abweichungskalibrierungsparameter abhängig ist, wobei das Verfahren vor dem Schritt (f) auch einen Schritt (d') zur gemeinsamen Schätzung von mindestens den Parametern zur Kalibrierung der räumlichen Kohärenz und der Abweichung aus der Sequenz von Schnittbildern des Objekts umfasst.

**6.** Verfahren nach Anspruch 5, wobei der Schritt (d') die gemeinsame Schätzung von mindestens den Parametern zur Kalibrierung der räumlichen Kohärenz und der Abweichung durch eine Maximum-Likelihood-Methode aus der Sequenz von Schnittbildern des Objekts umfasst.

**7.** Verfahren nach Anspruch 6, wobei die Schätzung durch eine Maximum-Likelihood-Methode auf der Hypothese basiert, dass die zweite Funktion zur Quantifizierung der räumlichen Kohärenz der rekonstruierten Form sowie die dritte Funktion zur Quantifizierung der Abweichung zwischen den Schnittbildern des Objekts und den entsprechenden Schnitten der rekonstruierten Form Gaußschen Verteilungen folgen.

**8.** Verfahren nach einem der vorhergehenden Ansprüche, wobei die Schnitte des Objekts durch aufeinanderfolgende Nenntranslationen erhalten werden, die durch zufällige Drehungen-Translationen einer Bilderfassungsebene überlagert werden, die nicht von vornherein bekannt sind.

**9.** Verfahren nach einem der Ansprüche 1 bis 7, wobei die Schnitte des Objekts durch aufeinanderfolgende Nenndrehungen um eine selbe Achse erhalten werden, die durch zufällige Drehungen-Translationen einer Bilderfassungsebene überlagert werden, die nicht von vornherein bekannt sind.

**10.** Verfahren nach Anspruch 9, wobei die Schritte (a) bis (f) für mindestens zwei Sequenzen von Schnitten wiederholt werden, die durch aufeinanderfolgende Nenndrehungen einer Bilderfassungsebene erhalten werden, wobei die Drehachsen, die den zwei Sequenzen von Schnitten entsprechen, im Wesentlichen orthogonal zueinander sind, und wobei die Rekonstruktionen der Form des Objekts, die aus den zwei Sequenzen von Schnitten erhalten werden, durch Interpolation vereinigt werden.

**11.** Verfahren zur Rekonstruktion der Form eines Objekts aus mehreren Sequenzen von Schnittbildern des Objekts, wobei jede Sequenz aus Schnitten besteht, die durch aufeinanderfolgende Nenntranslationen erhalten werden, die durch zufällige Drehungen-Translationen einer Erfassungsebene überlagert werden, die nicht von vornherein bekannt sind, wobei die Nennausrichtung der Erfassungsebene sich für jede Sequenz unterscheidet und auf unvollkommene Art und Weise bekannt ist,
wobei das Verfahren Folgendes umfasst:

(A) die Schätzung der relativen Positionierungen und Ausrichtungen der Beobachtungsebene für jeden der Schnitte der Sequenzen durch ein Verfahren nach einem der Ansprüche 1 bis 8,
(B) die Schätzung der Versatze und der Ausrichtungsunterschiede zwischen den verschiedenen Sequenzen und in Bezug auf das Objekt;
(C) die Kompensation der Versatze und Ausrichtungsunterschiede zwischen Sequenzen von Schnittbildern; und
(D) die Rekonstruktion der Form durch Interpolation von den Schnittbildern der Sequenzen, die als eine einzige Menge betrachtet werden.

**12.** Verfahren nach Anspruch 11, wobei der Schritt (B) zur Schätzung der Versatze und der Ausrichtungsunterschiede zwischen den verschiedenen Sequenzen von Schnittbildern des Objekts mittels einer Hauptkomponentenanalyse durchgeführt wird.

**13.** Verfahren nach Anspruch 12, wobei die Hauptkomponentenanalyse auf binarisierten Versionen der Sequenzen von Schnittbildern durchgeführt wird, wobei jede Sequenz von Schnittbildern mittels einer Binarisierungsschwelle binarisiert wird, die gemeinsam mit einer Binarisierungsschwelle einer als Bezug gewählten Sequenz geschätzt wird, wobei diese Schätzung für jede Sequenz außer der Bezugssequenz durch Minimierung einer Funktion der Abweichung zwischen den Eigenwerten der Varianz-Kovarianz-Matrix der Sequenz und denjenigen der Varianz-Kovarianz-Matrix der Bezugssequenz durchgeführt wird.

14. Verfahren zur Rekonstruktion der Form eines Objekts aus mehreren Sequenzen von Schnittbildern des Objekts, wobei die mehreren Sequenzen Folgendes umfassen:

- eine erste Sequenz von Schnittbildern des Objekts, die durch Translationen einer Beobachtungsebene in Bezug auf das Objekt erhalten wird; und
- mindestens eine zweite Sequenz von Schnittbildern des Objekts, die durch Drehungen einer Beobachtungsebene in Bezug auf das Objekt erhalten werden;

wobei zufällige Drehungen-Translationen, die nicht von vornherein bekannt sind, sich mit den Translationen oder Drehungen der Beobachtungsebene, die den verschiedenen Schnitten zugehörig ist, überlagern;
wobei das Verfahren Folgendes umfasst:

(i) eine vorhergehende Rekonstruktion der Form von der ersten Sequenz von Bildern durch ein Verfahren nach einem der Ansprüche 1 bis 8;
(ii) die Schätzung der Positionierung und der Ausrichtung der Schnitte der einen oder der mehreren zweiten Sequenzen und ihre räumliche Neueinstellung aus diesen Schätzungen; und
(iii) die Rekonstruktion der Form durch Interpolation aus der oder den zweiten Sequenz/en von neueingestellten Schnittbildern.

15. Verfahren zur Rekonstruktion der Form eines Objekts aus mehreren Sequenzen von Schnittbildern des Objekts, wobei die mehreren Sequenzen Folgendes umfassen:

- mehrere erste Sequenzen von Schnittbildern des Objekts, die durch Translationen von einer Beobachtungsebene in Bezug auf das Objekt erhalten werden; und
- mindestens eine zweite Sequenz von Schnittbildern des Objekts, die durch Drehungen einer Beobachtungsebene in Bezug auf das Objekt erhalten werden;

wobei die beliebigen Drehungen-Translationen, die nicht von vornherein bekannt sind, sich mit den Translationen oder Drehungen der Beobachtungsebene überlagern, die den verschiedenen Schnitten zugehörig ist;
wobei das Verfahren Folgendes umfasst:

i) eine vorhergehende Rekonstruktion der Form aus den ersten Bildsequenzen durch ein Verfahren nach einem der Ansprüche 11 bis 13;
ii) die Schätzung der Positionierung und der Ausrichtung der Schnitte der zweiten Sequenz/en und ihre räumliche Neueinstellung aus diesen Schätzungen; und
iii) die Rekonstruktion der Form durch Interpolation aus der oder den zweiten Sequenz/en von neuausgerichteten Schnittbildern.

16. Verfahren zur Rekonstruktion der Form eines Objekts aus mehreren Sequenzen von Schnittbildern des Objekts, wobei die mehreren Sequenzen Folgendes umfassen:

- eine erste Sequenz von Schnittbildern des Objekts, die durch Drehungen einer Beobachtungsebene in Bezug auf das Objekt erhalten wird; und
- mindestens eine zweite Sequenz von Schnittbildern des Objekts, die durch Translationen einer Beobachtungsebene in Bezug auf das Objekt erhalten werden;

wobei zufällige Drehungen-Translationen, die nicht von vornherein bekannt sind, sich mit den Translationen oder Drehungen der Beobachtungsebene, die den verschiedenen Schnitten zugehörig ist, überlagern;
wobei das Verfahren Folgendes umfasst:

(i) eine vorhergehende Rekonstruktion der Form von der ersten Sequenz von Bildern durch ein Verfahren nach einem der Ansprüche 1 bis 7 oder 9 oder 10;
(ii) die Schätzung der Positionierung und der Ausrichtung der Schnitte der einen oder der mehreren zweiten Sequenzen und ihre räumliche Neueinstellung aus diesen Schätzungen; und
(iii) die Rekonstruktion der Form durch Interpolation aus der oder den zweiten Sequenz/en von neueingestellten Schnittbildern.

**17.** Verfahren nach einem der Ansprüche 14 bis 16, wobei der Schritt (ii) zur Schätzung der Positionierung und der Ausrichtung der Schnitte der zweiten Sequenz/en und der räumlichen Neueinstellung aus diesen Schätzungen die Minimierung einer Funktion zur Quantifizierung der Abweichung zwischen den Schnittbildern des Objekts und den entsprechenden Schnitten der vorhergehend rekonstruierten Form umfasst.

**18.** Verfahren nach Anspruch 17, wobei die Minimierung einer Funktion zur Quantifizierung der Abweichung zwischen den Schnittbildern des Objekts und den entsprechenden Schnitten der vorhergehend rekonstruierten Form Folgendes umfasst:

- eine erste Phase zur vorhergehenden Schätzung basierend auf der Hypothese, dass alle Schnitte der oder jeder zweiten Sequenz durch konstante aber nicht bekannte Verschiebungen und/oder Translationen der Beobachtungsebene erhalten werden; und
- eine zweite Phase zur Verfeinerung, die die Schätzung der zufälligen Drehungen-Translationen umfasst, die sich mit den vermeintlich konstanten Translationen oder Drehungen der Beobachtungsebene, die den verschiedenen Schnitten zugehörig ist, überlagern.

**19.** Verfahren nach einem der vorhergehenden Ansprüche, wobei die Sequenzen von Schnittbildern des Objekts durch konfokale Mikroskopie erfasst werden.

**20.** Vorrichtung zur Rekonstruktion der Form eines Objekts, die Folgendes umfasst:

- ein Mittel zur Erfassung einer Sequenz von Schnittbildern des Objekts, wobei die Schnitte verschiedenen Positionierungen und/oder Ausrichtungen einer Erfassungsebene in Bezug auf das Objekt entsprechen; und
- ein Datenverarbeitungsmittel zum Rekonstruieren der Form des Objekts von der Sequenz von Schnittbildern von diesem letzteren;

**dadurch gekennzeichnet, dass**:

- die Positionierungen und/oder Ausrichtungen der Erfassungsebene, die den verschiedenen Schnitten entsprechen, Unsicherheiten unterliegen; und dadurch, dass:
- das Datenverarbeitungsmittel angepasst ist, um ein Verfahren nach einem der Ansprüche 1 bis 19 auszuführen.

**21.** Vorrichtung nach Anspruch 20, wobei das Mittel zur Erfassung einer Sequenz von Schnittbildern des Objekts ein konfokales Mikroskop ist, das mit einer Aufnahme zum Enthalten des Objekts und mit Mitteln zum Verschieben des Objekts in Bezug auf die Aufnahme versehen ist.

**Claims**

**1.** Method of reconstructing the volume of an object from a sequence of section images of said object, said sections corresponding to different positions and/or orientations of an acquisition plane relative to the object, said positions and/or orientations being subject to uncertainties, the method comprising:

a) selecting a finite base of functions on which the volume for reconstruction can be decomposed;
b) selecting a first quantification function for quantizing the difference between the real position and/or orientation of each section relative to said object and its nominal position and/or orientation;
c) selecting a second quantification function for quantizing the spatial coherence of the reconstructed volume;
d) selecting a third quantification function for quantizing the difference between the section images of the object and the corresponding sections of the reconstructed volume;
e) selecting an overall cost function, of value that depends on the values of said first, second, and third quantizing functions; and
f) jointly estimating the real positions and/or orientations of the section, together with the coefficient for decomposing the image of the object on said function base, by minimizing said overall cost function.

**2.** Method according to claim 1, wherein said finite base of functions on which the volume for reconstruction can be decomposed is a base defining a self-reproducing kernel Hilbert space, and wherein said second quantification function for quantizing the spatial coherence of the reconstructed volume is proportional to the norm of said self-reproducing kernel Hilbert space.

3. Method according to any preceding claim, wherein said first quantification function for quantizing the difference between the real position and/or orientation of each section and its nominal position and/or orientation is based on a Euclidean norm and/or a geodesic norm.

4. Method according to any preceding claim, wherein said first quantification function for quantizing the difference between the real position and/or orientation of each section and its nominal position and/or orientation depends on at least one calibration parameter characteristic of the instrument used for acquiring the section images of said object.

5. Method according to any preceding claim, wherein said second quantification function depends on at least one calibration parameter for calibrating spatial coherence, and said third quantification function depends on at least one calibration parameter for calibrating the difference, said method also including, prior to step f), a joint estimation step d') of estimating at least said difference and spatial coherence calibration parameters from said sequence of section images of said object.

6. Method according to claim 5, wherein step d') includes joint estimation of at least said spatial coherence and difference calibration parameters by a maximum likelihood method on the basis of said sequence of section images of said object.

7. Method according to claim 6, wherein said estimation by a maximum likelihood method is based on the assumption that said second quantification function for quantizing the spatial coherence of the reconstructed volume, and said third quantification function for quantizing the difference between the section images of the object and the corresponding sections of the reconstructed volume follow Gaussian distributions.

8. Method according to any preceding claim, wherein said sections of the object are obtained by successive nominal movements in translation of an image acquisition plane, having random rotation-translation movements that are unknown a priori superposed thereon.

9. Method according to any one of claims 1 to 7, wherein said sections of the object are obtained by successive nominal movements in rotation of an image acquisition plane about a common axis, having random rotation-translation movements that are unknown a priori superposed thereon.

10. Method according to claim 9, wherein said steps a) to f) are repeated for at least two section sequences obtained by successive nominal rotations of an image acquisition plane, the axes of rotation corresponding to said two section sequences being substantially mutually orthogonal, and wherein the reconstructions of the volume of the object as obtained from said two section sequences are fused by interpolation.

11. Method of reconstructing the volume of an object from a plurality of section image sequences of said object, each sequence being constituted by sections obtained by successive nominal movements in translation of an acquisition plane having random rotation-translation movements that are unknown a priori superposed thereon, the nominal orientation of said acquisition plane being different for each sequence and being known in imperfect manner, said method comprising:

A) estimating the relative positions and orientations of the observation plane for each of the sections of said sequences by a method according to any one of claims 1 to 8;
B) estimating the offsets and the orientation differences between the different sequences and relative to said object;
C) compensating the offsets and orientation differences between section image sequences; and
D) reconstructing said volume by interpolation from the section images of said sequences considered as constituting a single set.

12. Method according to claim 11, wherein step B) of estimating the offsets and the orientation differences between different section image sequences of said object is performed by means of principal component analysis.

13. Method according to claim 12, wherein said principal component analysis is performed on binarized versions of said section image sequences, each section image sequence being binarized using a binarizing threshold that is jointly estimated together with a binarizing threshold of a sequence selected as a reference, said estimation being performed for each sequence other than the reference sequence by minimizing a function of the differences between the eigenvalues of the variance-covariance matrix of said sequence and the eigenvalues of the variance-covariance matrix of said reference sequence.

14. Method of reconstructing the volume of an object from a plurality of section image sequences of said object, wherein said plurality of sequences comprises:

· a first section image sequence of the object obtained by movements in translation of an observation plane relative to said object; and
· at least one second section image sequence of the object obtained by movements in rotation of an observation plane relative to said object;

where random rotation-translation movements that are unknown a priori are superposed on said movements in translation or in rotation of the observation plane associated with the various sections;
said method comprising:

i) a preliminary reconstruction of said volume from said first image sequence using a method according to any one of claims 1 to 8;
ii) estimating the positions and orientations of the sections of said first and second sequences, and repositioning them in space on the basis of said estimates; and
iii) reconstructing said volume by interpolation from said repositioned second sequence(s) of sections.

15. Method of reconstructing the volume of an object from a plurality of section image sequences of said object, wherein said plurality of sequences comprises:

· a plurality of first section image sequences of the object obtained by movements in translation of an observation plane relative to said object; and
· at least one second section image sequence of the object obtained by movements in rotation of an observation plane relative to said object;

where random rotation-translation movements that are unknown a priori are superposed on said movements in translation or in rotation of the observation plane associated with the various sections;
said method comprising:

i) a preliminary reconstruction of said volume from said first image sequences using a method according to any one of claims 11 to 13;
ii) estimating the positions and the orientations of the sections of said second sequence(s), and repositioning them in space on the basis of said estimations; and
iii) reconstructing said volume by interpolation on the basis of said repositioned second image sequence(s) of sections.

16. Method of reconstructing the volume of an object from a plurality of section image sequences of said object, wherein said plurality of sequences comprises:

· a first sequence of image sections of the object obtained by movements in rotation of an observation plane relative to said object; and
· at least one second sequence of section images of the object obtained by movements in translation of an observation plane relative to said object;

where random rotation-translation movements that are unknown a priori are superposed on said movements in translation or rotation of the observation plane associated with the various sections;
said method comprising:

i) a preliminary reconstruction of said volume from said first image sequence by a method according to any one of claims 1 to 7 or 9 or 10;
ii) estimating the positions and the orientations of the sections of said second sequence(s), and repositioning them in space on the basis of said estimates; and
iii) reconstructing said volume by interpolation from said repositioned second image sequence(s) of sections.

17. Method according to any one of claims 14 to 16, wherein said step ii) of estimating the positions and the orientations of the sections of said second sequence(s), and of repositioning them in space on the basis of said estimates comprises minimizing a quantification function for quantizing the difference between the section images of the object and the corresponding sections of the preliminary reconstructed volume.

**18.** Method according to claim 17, wherein minimizing a quantification function for quantizing the difference between the section images of the object and the corresponding sections of the preliminary reconstructed volume comprises:

· a first phase of preliminary estimation based on the assumption that all of the sections of said or each second sequence are obtained by shifts and/or movements in translation of said observation plane that are constant but unknown; and
· a second phase of refinement comprising estimating the random rotation-translation movements that are superposed on the movements in translation or rotation that are assumed to be constant of the observation plane associated with the various sections.

**19.** Method according to any preceding claim, wherein said section image sequences of said object are acquired by confocal microscopy.

**20.** Device for reconstructing the volume of an object, the device comprising:

· means for acquiring a sequence of section images of said object, said sections corresponding to different positions and/or orientations of an acquisition plane relative to the object; and
· data processor means for reconstructing the volume of said object from said sequence of section images thereof;

the device being **characterized in that**:

· the positions and/or orientations of the acquisition plane corresponding to the various sections are subjected to uncertainties; and **in that**
· the data processor means are adapted to implement a method according to any one of claims 1 to 19.

**21.** Device according to claim 20, wherein said means for acquiring a sequence of section images of said object comprise a confocal microscope fitted with a container for containing said object, and with means for moving said object relative to the container.

FIG. 1A

FIG. 1B

FIG. 1C

FIG. 1D

TD

M

C

FIG. 8

```
┌─────────┐
│    a    │
└─────────┘
     │
     ▼
┌─────────┐
│    b    │
└─────────┘
     │
     ▼
┌─────────┐
│    c    │
└─────────┘
     │
     ▼
┌─────────┐
│    d    │
└─────────┘
     │
     ▼
┌─────────┐
│   d'    │
└─────────┘
     │
     ▼
┌─────────┐
│    e    │
└─────────┘
     │
     ▼
┌─────────┐
│    f    │
└─────────┘
     │
     ▼
    ◯
```

FIG. 2

```
┌─────────┐
│    A    │
└─────────┘
     │
     ▼
┌─────────┐
│    B    │
└─────────┘
     │
     ▼
┌─────────┐
│    C    │
└─────────┘
     │
     ▼
┌─────────┐
│    D    │
└─────────┘
     │
     ▼
    ◯
```

FIG. 3

```
┌─────────┐
│    i    │
└─────────┘
     │
     ▼
┌─────────┐
│   ii    │
└─────────┘
     │
     ▼
┌─────────┐
│   iii   │
└─────────┘
     │
     ▼
    ◯
```

FIG. 4

FIG. 5

FIG. 6A

FIG. 6B

FIG. 7A

FIG. 7B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1413911 A

**Littérature non-brevet citée dans la description**

- **DE S. BRANT ; M. MEVORAH.** Camera motion recovery without correspondence from microrotation sets in wide-field light microscopy. *Proceedings of the Statistical Methods in Multi-Image and Video Processing Workshop - ECCV 2006,* Mai 2006

- **DE S. BRANDT ; M. MEROVAH.** Camera Motion Recovery Without Correspondence from Microrotation Sets in Wide-Field Light Microscopy. *Proc. Statistical Methods in Multi-Image and Video Processing Workshop, ECCV,* 2006